# EUROPÄISCHE PATENTANMELDUNG

(11) **EP 1 698 512 A1**
(43) Veröffentlichungstag der Anmeldung: **06.09.2006**
(21) Anmeldenummer: 06004490.6
(22) Anmeldetag: 06.03.2006
(51) Int. Cl.: B60N 2/58

(54) **Haltevorrichtung und Herstellungsverfaren einer Haltevorrichtung**

(30) Priorität: 04.03.2005 DE 102005010590
(71) Anmelder: Sand, Werner, 63802 Kleinostheim (DE)
(72) Erfinder: Sand, Werner, 63802 Kleinostheim (DE); Bäcker, Frank, 63741 Aschaffenburg (DE); Hepp, Christian, 63906 Erlenbach (DE)
(74) Vertreter: Thürer, Andreas

(57) **Zusammenfassung**

Um eine Haltevorrichtung für eine Ausstattungskomponente eines Sitzes, insbesondere einen Sitzbezug (1), mit einem mit der Ausstattungskomponente, insbesondere einem Bezugsmaterial, verbundenen Haltemittel (2), das an einem Sitzmaterial (3) des Sitzes gehalten ist, wobei zumindest eine Durchbrechung (4) in dem Sitzmaterial (3) vorgesehen ist, hinter der das Haltemittel (2) im Hintergriff unter Zugspannung gehalten ist, so auszubilden, dass eine Herstellung und Einrichtung der Haltevorrichtung mit wenigen Schritten ermöglicht und zugleich einen sicheren Halt gewährleistet wird. wird vorgeschlagen, dass das Haltemittel (2) einen Profilbereich (5) mit beidseitig um eine im wesentlichen mittige Ausnehmung (6) aufgeklappte und sich gegenseitig im Ausnehmungsbereich unter der Zugspannung stützende Profilschenkel (7) aufweist, die nach Art eines Ankers im Hintergriff gegenüber dem Sitzmaterial (3) gehalten sind.

## Beschreibung

Die Erfindung betrifft ein Haltevorrichtung für eine Ausstattungskomponente eines Sitzes, insbesondere einen Sitzbezug, mit einem mit der Ausstattungskomponente, insbesondere einem Bezugsmaterial, verbundenen Haltemittel, das an einem Sitzmaterial des Sitzes gehalten ist, wobei zumindest eine Durchbrechung in dem Sitzmaterial vorgesehen ist, hinter der das Haltemittel im Hintergriff unter Zugspannung gehalten ist. Weiterhin betrifft die Erfindung ein Herstellungsverfahren zur Herstellung eine Haltevorrichtung mit einem Profilbereich mit Profilschenkeln, sowie einen Sitz, insbesondere Kraftfahrzeugsitz, mit einer Ausstattungskomponente, insbesondere einem Sitzbezug und ein Verfahren zum Befestigen einer Ausstattungskomponente eines Sitzes, insbesondere eines Sitzbezugs.

Im Stand der Technik sind verschiedene Haltevorrichtungen mit Haltemitteln für Sitzbezüge offenbart. DE 82 09 355 zeigt einen Sitzbezug eines Polstersitzes mit über der gesamten Breite verlaufenden Ziernähten, die über Befestigungsdrähte und Ringklammern mit im Polsterkern eingeschäumten Haltedrähten zur Herstellung einer Haltevorrichtung verbunden und verspannt sind, wobei sich der unterhalb der Ziernaht verlaufende Befestigungsdraht ebenfalls über die gesamte Breite des Sitzes erstreckt und mit einem Schenkel in einem Sitzrahmen eingehängt ist.

DE 42 19 657 C2 offenbart eine Befestigungsklammer aus Kunststoff, die von der Sitzschalenseite in Durchbrechungen des Sitzpolsters eingeführt werden. Von der Sitzbezugseite ausgehend werden entsprechend an den Sitzbezug in Schlaufenbänder eingenähte Drähte zur Herstellung einer Haltevorrichtung so eingeführt, dass sie in die von der anderen Sitzseite her eingesetzte Sitzklammern einrasten.

Die DE 30 37 834 offenbart einen Sitz, insbesondere einen Kraftfahrzeugsitz, mit einem Polsterteil, und einem Bezug, dessen pfeilartige Befestigungsteile gleicher Länge hinter Durchführungen mit örtlichen Einbuchtungen gehalten werden.

Der Aufbau der Haltevorrichtungen gemäß dem bisherigen Stand der Technik ist aufwendig. Die einzelnen Bestandteile der Haltevorrichtung müssen in mehreren Herstellungsschritten aufgebaut und eingerichtet werden. Zur endgültigen Herstellung der Verbindung muss der Sitz von der Vorder- und Rückseite aus zeitgleich mit einem Teil der Haltevorrichtung versehen werden, um die Haltevorrichtung festzulegen oder es müssen Werkzeuge zur Aufbringung der Kraft zur Befestigung eingesetzt werden.

Aufgabe der vorliegenden Erfindung ist es, unter Vermeidung der Nachteile des Stands der Technik eine Haltevorrichtung bereitzustellen, die eine Herstellung und Einrichtung der Haltevorrichtung mit wenigen Schritten ermöglicht und zugleich einen sicheren Halt gewährleistet.

Die Aufgabe wird gelöst durch eine einführend dargestellte Haltevorrichtung, wobei das Haltemittel einen Profilbereich mit beidseitig um eine im wesentlichen mittige Ausnehmung aufgeklappte und sich gegenseitig im Ausnehmungsbereich unter der Zugspannung stützende Profilschenkel aufweist, die nach Art eines Ankers im Hintergriff gegenüber dem Sitzmaterial gehalten sind.

Der Profilbereich der Haltevorrichtung hat einen einfachen Aufbau aus einem zentralen Profilbereich mit einer Ausnehmung, die beidseitig von Profilschenkeln umgeben ist. Beim Einführen in eine Durchbrechung des Sitzmaterials klappen die Profilflügel an einen zentralen Profilkörper an. Dieses Anklappen wird durch die Ausnehmung erleichtert und kann somit durch einen sehr geringen Kraftaufwand vorgenommen werden. Die Ausnehmung weist als Seitenwände vorzugsweise dünne Knickstellen zur Ermöglichung einer leichten Bewegung der Profilschenkel auf. In Verlängerung der Knickstellen sind dann die Profilschenkel vorgesehen. Beim Einführen in die Durchbrechung legen sich die Profilschenkel somit in der Art eines Gelenkes an und sind auch bei sehr schmalen Durchbrechungen leicht einzuschieben. Es treten lediglich geringe Rückfederungskräfte auf. Diese dienen dazu - insbesondere unter Zuhilfenahme der Schwerkraft - ein Aufklappen der Profilschenkel nach Beendigung des Durchführvorgangs sicherzustellen. Ein verfrühtes Aufklappen und somit ein eventuelles Verhaken innerhalb der Durchbrechung wird verhindert.

Nach dem Aufklappen der Profilschenkel legen sie sich unter Zugspannung an einer Austrittsseite der Durchgangsöffnung an das Sitzmaterial an. Die Profilschenkel sind vorzugsweise so dünn, dass sie zwar einen ausreichenden Widerstand gegen die anliegende Zugspannung bieten, jedoch zugleich keine Störung des Sitzgefühls eintritt. Eine zusätzliche Versenkung des Profilbereichs im Sitzmaterial beispielsweise mittels eines Hinterschnitts kann bedarfsweise durchgeführt werden, ist aber nicht notwendig. Die erfindungsgemäße Haltevorrichtung zeigt somit auch bei sehr weichen Sitzpolsterungen eine geringe Verletzungswahrscheinlichkeit. Die Haltevorrichtung trägt nicht auf, was bei den engen Verbauräumen in Sitzen ein erheblicher Vorteil ist. Durch den Klappmechanismus der Profilschenkel beim Einführen und beim Anlegen sind mit dem gleichen Haltemittel Mehrfachmontagen und - demontagen möglich, wenn beispielsweise die Profilschenkel weiter durch die Durchbrechung durchgeschoben werden.

Das Haltemittel kann in seinen Größenabmessungen, insbesondere seiner Längs-und Querausdehnung der Profilschenkel leicht so eingerichtet werden, dass - unter Berücksichtigung der Sitzmaterialeigenschaften - ein ausreichender Rückhalt hinter der Durchbrechung gegeben ist. Die Durchführ- und Aufklappeigenschaften bleiben erhalten. Selbst große Profilschenkel, die einen starken Rückhalt geben können, können eng an dem Sitzmaterial anliegend ausgebildet werden. Bei diesem System sind sehr große Schenkellängen und -breiten möglich, was zu einer hohen Flächenanlage führt und dadurch auch zum Halt in weicheren Sitzmaterialien gut geeignet ist. Grundsätzlich ist diese Art der Befestigung sowohl in weichen Schaummaterialien als auch in harten Materialien wie Metall, sonstigen Kunstoffen oder auch Presspappe, Holz möglich, soweit entsprechende Durchbrechungen einzubringen sind. Es können beispielsweise auch aneinanderstoßende Kanten von zwei aneinandergrenzenden Sitzmaterialblöcken als Durchbrechung verwendet werden.

Neben einem Sitzbezug können durch das vorgeschlagene Haltemittel auch leicht andere Ausstattungskomponenten an dem Sitz gehalten werden, beispielsweise zusätzliche Taschen oder Zierelemente.

Vorteilhaft ist es, wenn die Ausnehmung einen ovalen, dreieckigen oder trapezförmigen Querschnitt aufweist, wobei insbesondere die Ausnehmung an der Innenfläche ausgerundet ist. Durch die Form der Ausnehmung kann auf einfache Weise ein an die lokal vorherrschende Belastung individuell angepasster Profilbereich erhalten werden. Vorzugsweise wird die Durchbrechung umso schmaler, je höher die Belastung und je weicher das Sitzmaterial. Die Ausbildung mit einer ausgerundeten Innenfläche verhindert zudem die Bildung von Spannungsspitzen im Profil beispielsweise beim Einführen oder bei einer Wechselbelastung beim Benutzen des Sitzes.

Ein sicherer Halt ist gegeben, wenn sich - im Querschnitt gesehen - Abschnitte der sich gegenüberliegenden Seitenwandungen der Ausnehmung unter der Durchbiegung, die durch die Zugspannung verursacht ist, aneinander abstützen und damit die Durchbiegung begrenzen und eine Auszugsstabilität geben. Auch bei Verwendung von sehr dünnen Knickstellen zur Erleichterung des Einführens des Haltemittels stehen die Knickstellen somit im stärker belastenden Haltevorgang nur unter einem geringen Kraftangriff. Ein Dreiecksquerschnitt der Ausnehmung verengt sich nach innen; insbesondere der Trapez- und Rundquerschnitt kann sich auch nach außen verengen, so dass sich die äußeren Kanten auch schon bei geringerer Gesamtdurchbiegung bereits annähern und sich wirkungsvoll als Gegenkraftaufbau gegen eine angreifende Zugkraft aneinander abstützen. Hierdurch können zudem die Öffnungswinkel der Profilschenkel auf einfache Weise eingestellt werden.

Sehr variable Einsatzmöglichkeiten der Haltevorrichtung an unterschiedlichsten Sitzkonstruktionen sind gegeben, wenn die Ausnehmung eine sich im wesentlichen über die gesamte Länge des Profilbereichs erstreckende Längsnut ist. Die Haltevorrichtung kann somit leicht an Vorgaben aus der Konstruktion von Sitzen, die beispielsweise durch vorhergehende Herstellungsvorgänge bedingt sind, angepasst werden. Bereits vorhandene Durchbrechnungen können jeweils durch Einsatz eines entsprechenden Haltemittels genutzt werden. Das Sitzmaterial muss nicht durch weitere Bearbeitungsvorgänge im Hinblick auf die Herstellung von Durchbrechungen geschwächt werden und es wird Bearbeitungszeit eingespart.

Ein leichtes und zuverlässiges Aufklappen nach dem Durchführen durch die Durchbrechung ist möglich, wenn die Ausnehmung in einer von der daran befestigten Ausstattungskomponente abgewandten Richtung offen ist. Hierdurch entsteht lediglich ein sehr geringer Widerstand gegen das Aufklappen, der leicht beispielsweise durch die Schwerkraft auf die Profilschenkel überwunden wird.

Ein sicheres Anliegen an dem Sitzmaterial ist gegeben, wenn ein Öffnungswinkel zwischen den aufgeklappten Profilschenkeln unter der Zugspannung zwischen etwa 100° und etwa 180°, insbesondere etwa 175° beträgt. Durch den großen Öffnungswinkel steht lediglich ein sehr kleiner Bereich des Haltemittels vom Sitzmaterial ab, das Haltemittel trägt nicht auf.

Ein zusätzlicher Schutz gegen ein Verrutschen im Haltezustand wird erreicht, wenn die Profilschenkel an der dem Sitzmaterial zugewandten Seite zumindest einen Haltezahn und/oder einen Haltesteg aufweisen. Der Profilschenkel ist hierdurch mit dem Sitzmaterial sehr fest verbunden, wodurch auch geringere Schenkelflächen der Profilbereiche zur Sicherstellung des Halts ausreichen.

Auch bei konstanter Auflagefläche der Profilschenkel kann eine weitere Erhöhung der Haltekraft dadurch erreicht werden, dass Haltezähne in Reihen und/oder versetzt angeordnet sind.

Der Durchführvorgang wird weiter erleichtert, wenn die Ausnehmung durch eine dünnwandige Einführspitze zumindest bei einem Einführvorgang des Haltemittels in die Durchbrechung abgedeckt ist.

Ein einfacher und zugleich stabiler Aufbau des Haltemittels liegt vor, wenn der Profilbereich als längliche Profilschiene ausgebildet ist. Profilbereiche mit unterschiedlichen Längen sind leicht aus einem extrudierten Profilbereich durch Ablängen herzustellen.

Vorteilhaft ist es, wenn der Profilbereich an einer Fahne, insbesondere einer Gewebefahne, insbesondere aus PES, befestigt ist, die an der Ausstattungskomponente des Sitzes, insbesondere dem Sitzbezug befestigt ist. Die Fahne kann in ihrer Länge und Breite leicht an die Durchbrechungsgeometrie angepasst werden.

Eine an die individuellen Anforderungen angepasst ausgebildete Haltevorrichtung ist unter Verwendung von vorkonfektionierten Haltemitteln möglich, wenn mehrere Profilbereiche an einer Fahne befestigt sind, die an der Ausstattungskomponente, insbesondere dem Sitzbezug, angebracht ist. Die Haltemittel können in gleichem Abstand aber auch mit an die jeweiligen Halteanforderungen angepasstem Abstand angebracht werden.

Vorteilhaft ist es, wenn der Profilbereich aus einem insbesondere elastischem Kunststoff, insbesondere aus ABS, PP, PA, PE, PES, TPO, oder PU besteht. Durch die elastischen Eigenschaften kann die Knickstelle des Haltemittels die Scharnierfunktion leicht ausüben und das Haltemittel ist auch wiederverwendbar.

Die Aufgabe wird auch gelöst durch ein Herstellungsverfahren zur Herstellung eine Haltevorrichtung mit einem Profilbereich mit Profilschenkeln, nach einem der Ansprüche 1 bis 12, wobei der Profilbereich extrudiert oder im Spritzgussverfahren hergestellt wird und insbesondere an eine Gewebefahne anextrudiert, angenäht, angeschweißt oder angeklebt wird.

Die Aufgabe wird ebenfalls gelöst durch einen Sitz, insbesondere Kraftfahrzeugsitz, mit einer Ausstattungskomponente, insbesondere einem Sitzbezug, die mit einer Haltevorrichtung mit einem Haltemittel mit Profilschenkeln, die sich im Hintergriff hinter einer Durchbrechung in einem Sitzmaterial gegeneinander abstützen, insbesondere nach einem der Ansprüche 1 bis 12, an dem Sitzmaterial befestigt ist.

Ein sicherer Halt des Haltemittels ist gegeben, wenn das Sitzmaterial ein Füllstoff, insbesondere ein Schaumstoff, insbesondere ein PU-Schaumstoff, ist, der eine vorbestimmte Härte aufweist, so dass der Füllstoff eine der einwirkenden Kraft der Profilschenkel der Haltemittel den Hintergriff aufrechterhaltende Gegenkraft entgegensetzt.

Eine Ausstattungskomponente, insbesondere ein Sitzbezug kann vorteilhaft ohne Umkonstruktion gehalten werden, wenn das Sitzmaterial eine Sitzschale, insbesondere aus Hartkunststoff, ist.

Eine Vereinfachung der Herstellung der Haltevorrichtung vor Ort ist gegeben, wenn die vorbestimmte Anzahl und Art von Haltemitteln im Sinne einer Vorkonfektionierung am Sitzbezug angeordnet sind.

Die Aufgabe wird ebenfalls gelöst durch ein Verfahren zum Befestigen einer Ausstattungskomponente eines Sitzes, insbesondere eines Sitzbezugs, wobei ein an der Ausstattungskomponente befestigtes Haltemittel, insbesondere ein Haltemittel mit einem Profilbereich mit klappbaren Profilschenkeln, nach einem der Ansprüche 1 bis 12, von einer Sitzoberseite durch eine Durchbrechung eines Sitzmaterials des Sitzes zumindest so weit hindurchgeschoben wird, bis die angeklappte Profilschenkel durch die Durchbrechung bis zu einer Ausgangsseite vollständig hindurchgeführt sind, so dass sich die Profilschenkel auf der Ausgangsseite seitwärts hinter Ränder der Durchbrechung entfalten.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine Haltevorrichtung mit Haltemittel an einem Sitzbezug vor dem Hindurchführen,
- Fig.2: eine Haltevorrichtung mit Haltemittel beim Hindurchführen,
- Fig.3: eine Haltevorrichtung mit Haltemittel nach dem Hindurchführen und
- Fig.4a: eine Haltevorrichtung mit Haltemittel mit Haltezähnen vor dem Hindurchführen
- Fig. 4b: eine Haltevorrichtung mit Haltemittel mit Haltezähnen beim Hindurchführen und
- Fig. 4c: eine Haltevorrichtung mit Haltemittel mit Haltezähnen nach dem Hindurchführen.

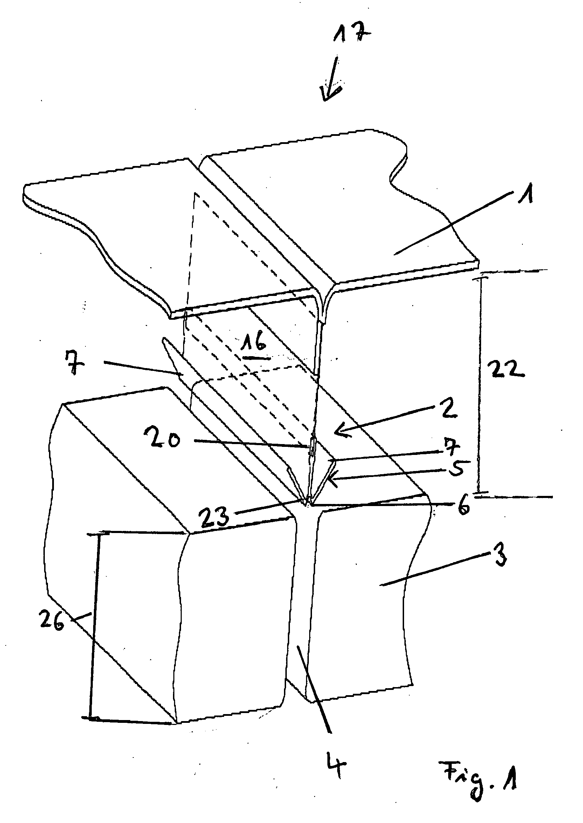

Fig.1 zeigt eine Haltevorrichtung mit Haltemittel 2 an einem Sitzbezug 1 vor dem Hindurchführen. Das Haltemittel 1 ist beispielsweise in einem Extrusionvorgang hergestellt wurden und vorzugsweise bei diesem Extrusionsvorgang direkt mit einer Fahne 16 in einem Verbindungsbereich 20 verbunden worden. Diese Verbindung kann jedoch auch erst nach dem Herstellungsvorgang des Profilbereichs beispielsweise durch Anschweißen oder Annähen geschehen. Die Fahne 16 wiederum wird an der Innenseite 21 des Sitzbezugs 1 befestigt, beispielsweise angenäht. Die Höhe 22 des Haltemittels 1 ist vorzugsweise so auf eine Durchbrechung 4 eines Sitzmaterials 3 abgestimmt, dass eine leichte Zugspannung entsteht, sobald sich das Haltemittel 2 nach dem Aufklappen von Profilschenkeln 7 an das Sitzmaterial angelegt hat. Die Profillänge in Längsrichtung ist an die Erfordernisse der Sitzkonstruktion leicht anpassbar. Zu Anpassung an unterschiedliche Bereiche des Sitzes oder unterschiedliche Sitzmaterialdicken 26 kann beispielsweise die Profilhöhe 25 konstant bleiben, weil die Höhe der Fahne 16 leicht veränderbar ist.

Das Haltemittel 2 hat nach dem Herstellungsvorgang zunächst beispielsweise eine leichte Pfeilform, wobei im Pfeilspitzenbereich eine Ausnehmung 6 eingebracht ist, deren Größe sich bei Bewegung der benachbarten Profilschenkel 7 verändert. Die Ausnehmung 6 ermöglicht ein einfaches Zusammenklappen der Profilschenkel 7 durch Bewegung an Knickstellen 23, die benachbart zu der Ausnehmung 6 und den Profilschenkeln 7 ausgebildet sind.

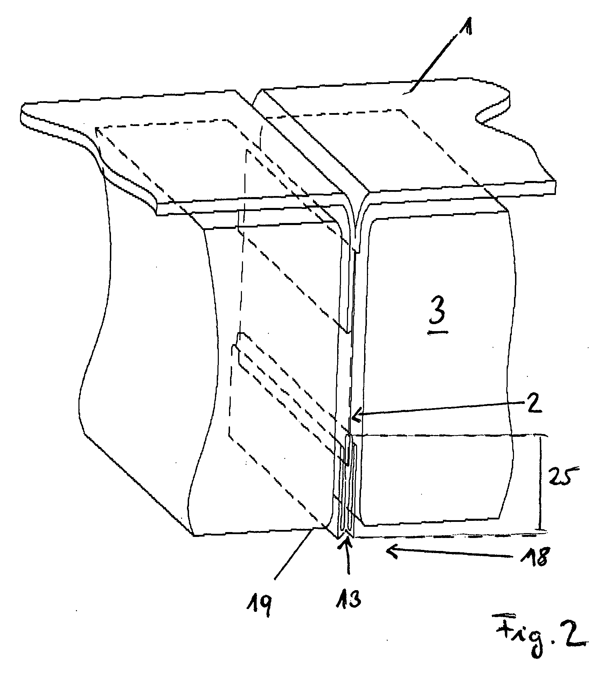

Fig.2 zeigt eine Haltevorrichtung mit Haltemittel 2 beim Hindurchführen. Das Haltemittel 2 ist durch das Zusammenklappen der Profilschenkel 7 sehr schmal und kann mit einem sehr geringen Kraftaufwand auch in engen Durchbrechungen eingeführt werden. Die Länge der Durchbrechungen kann über den gesamten Sitzbereich geführt werden oder auch mit Unterbrechungen ausgebildet sein.

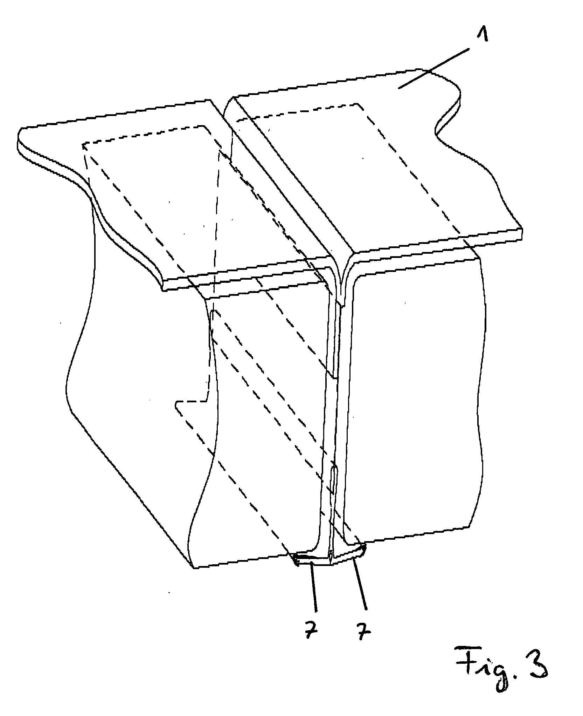

Fig.3 zeigt eine Haltevorrichtung mit Haltemittel 2 nach dem Hindurchführen. Das Haltemittel 2 hat sich nach dem Durchführen durch die Durchbrechung 4 so weit aufgeklappt, bis Abschnitte 11 von Seitenwänden 10 der Ausnehmung 8 aneinander stoßen und sich gegenseitig aneinder abstützen, so dass eine Gegenkraft der Profilschenkel 7 zu einer auf das Haltemittel 2 ausgeübten Zugspannung auftritt. Hierdurch wird das Haltemittel 2 festgesetzt und ist auch bei einer starken Wechselbeanspruchung des Sitzes sicher gehalten.

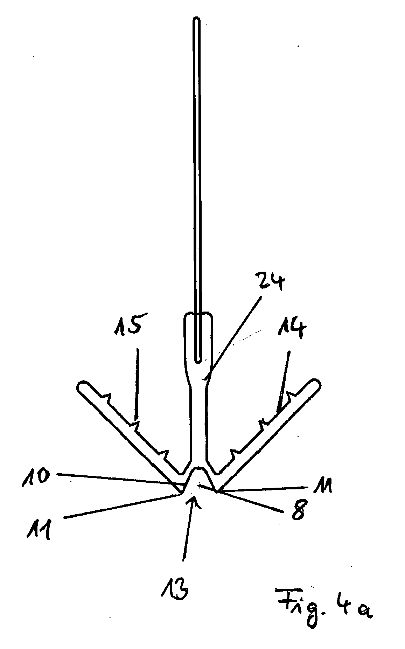

Fig.4a zeigt eine Haltevorrichtung mit Haltemittel 2 mit Haltezähnen 15 vor dem Hindurchführen. Die Haltezähne 15 sind an der dem Sitzmaterial 3 zugewandten Innenseite 14 des Haltemittels 2 angebracht.

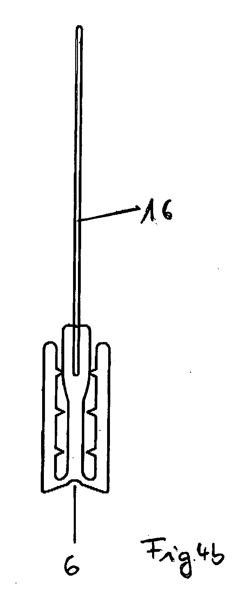

Fig. 4b zeigt eine Haltevorrichtung mit Haltemittel mit Haltezähnen 15 beim Hindurchführen. Beim Durchführen klappen die Haltezähne 15 an einen Innenteil 24 des Profilbereichs 5. Die Haltezähne 15 stellen somit kein Hindernis beim Durchführen durch die Durchbrechung 4 dar.

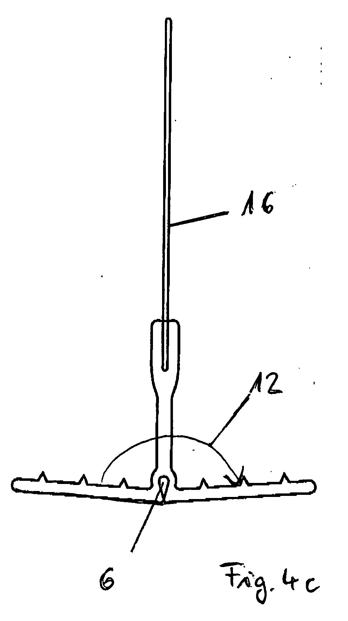

Fig. 4c zeigt eine Haltevorrichtung mit Haltemittel 2 mit Haltezähnen 15 nach dem Hindurchführen durch eine Durchbrechung 4. Die Haltezähne 15 liegen an der Innenseite 14 des Haltemittels 2 und liegen somit nach dem Aufklappen an dem Rand 19 der Durchbrechung 4 an, wodurch ein größerer Widerstand gegen ein Verrutschen oder ein Ausziehen bei der Benutzung des Sitzes gegeben ist. Die Profilschenkel 7 haben einen Öffnungswinkel 12, der an die entsprechenden räumlichen Anforderungen sowie an die Erfordernisse aufgrund der angreifenden Kräfte leicht angepasst werden können.

### BEZUGSZEICHENLISTE

- 1: Sitzbezug
- 2: Haltemittel
- 3: Sitzmaterial
- 4: Durchbrechung
- 5: Profilbereich
- 6: Ausnehmung
- 7: Profilschenkel
- 8: Querschnitt
- 9: Innenfläche
- 10: Seitenwandung
- 11: Abschnitt
- 12: Öffnungswinkel
- 13: Richtung
- 14: Seite
- 15: Haltezahn
- 16: Fahne
- 17: Sitzoberseite
- 18: Austrittsseite
- 19: Rand
- 20: Verbindungsbereich
- 21: Innenseite
- 22: Höhe
- 23: Knickstellen
- 24: Innenteil
- 25: Profilhöhe
- 26: Sitzmaterialdicke

## Patentansprüche

1. Haltevorrichtung für eine Ausstattungskomponente eines Sitzes, insbesondere einen Sitzbezug (1), mit einem mit der Ausstattungskomponente, insbesondere einem Bezugsmaterial, verbundenen Haltemittel (2), das an einem Sitzmaterial (3) des Sitzes gehalten ist, wobei zumindest eine Durchbrechung (4) in dem Sitzmaterial (3) vorgesehen ist, hinter der das Haltemittel (2) im Hintergriff unter Zugspannung gehalten ist, **dadurch gekennzeichnet, dass** das Haltemittel (2) einen Profilbereich (5) mit beidseitig um eine im wesentlichen mittige Ausnehmung (6) aufgeklappte und sich gegenseitig im Ausnehmungsbereich unter der Zugspannung stützende Profilschenkel (7) aufweist, die nach Art eines Ankers im Hintergriff gegenüber dem Sitzmaterial (3) gehalten sind.

2. Haltevorrichtung nach Anspruch 1, **dadurch gekennzeichnet, dass** die Ausnehmung (6) einen ovalen, dreieckigen oder trapezförmigen Querschnitt (8) aufweist, wobei insbesondere die Ausnehmung (6) an der Innenfläche (9) ausgerundet ist.

3. Haltevorrichtung nach Anspruch 1 oder 2, **dadurch gekennzeichnet, dass** sich - im Querschnitt (8) gesehen - Abschnitte (11) von sich gegenüberliegenden Seitenwandungen (10) der Ausnehmung (6) unter der Durchbiegung, die durch die Zugspannung verursacht ist, aneinander abstützen und damit die Durchbiegung begrenzen und eine Auszugsstabilität geben.

4. Haltevorrichtung nach Anspruch 1 oder 3, **dadurch gekennzeichnet, dass** die Ausnehmung (6) in einer von der daran befestigten Ausstattungskomponente abgewandten Richtung (13) offen ist.

5. Haltevorrichtung nach einem der Ansprüche 1 bis 4, **dadurch gekennzeichnet, dass** ein Öffnungswinkel (12) zwischen den aufgeklappten Profilschenkein (7) unter der Zugspannung zwischen etwa 100° und etwa 180°, insbesondere etwa 175° beträgt.

6. Haltevorrichtung nach einem der Ansprüche 1 bis 5, **dadurch gekennzeichnet, dass** die Profilschenkel (7) an der dem Sitzmaterial (3) zugewandten Seite (14) zumindest einen Haltezahn (15) und/oder einen Haltesteg aufweisen.

7. Haltevorrichtung nach Anspruch 6, **dadurch gekennzeichnet, dass** Haltezähne (15) in Reihen und/oder versetzt angeordnet sind.

8. Haltevorrichtung nach einem der Ansprüche 1 bis 7, **dadurch gekennzeichnet, dass** die Ausnehmung (6) durch eine dünnwandige Einführspitze zumindest bei einem Einführvorgang des Haltemittels (6) in die Durchbrechung (4) abgedeckt ist.

9. Haltevorrichtung nach einem der Ansprüche 1 bis 8, **dadurch gekennzeichnet, dass** der Profilbereich (5) als längliche Profilschiene ausgebildet ist und die Ausnehmung (6) eine sich im wesentlichen über die gesamte Länge des Profilbereichs (5) erstreckende Längsnut ist.

10. Haltevorrichtung nach einem der Ansprüche 1 bis 9, **dadurch gekennzeichnet, dass** der Profilbereich (5) an einer Fahne (16), insbesondere einer Gewebefahne, insbesondere aus PES, befestigt ist, die an der Ausstattungskomponente des Sitzes, insbesondere dem Sitzbezug (1), befestigt ist.

11. Haltevorrichtung nach einem der Ansprüche 1 bis 10, **dadurch gekennzeichnet, dass** mehrere Profilbereiche (5) an einer Fahne befestigt sind, die an der Ausstattungskomponente, insbesondere dem Sitzbezug (1), angebracht ist.

12. Haltevorrichtung nach einem der Ansprüche 1 bis 11, **dadurch gekennzeichnet, dass** der Profilbereich (5) aus einem insbesondere elastischem Kunststoff, insbesondere aus ABS, PP, PA, PE, PES, TPO, oder PU besteht.

13. Herstellungsverfahren zur Herstellung eine Haltevorrichtung mit einem Profilbereich (5) mit Profilschenkeln (7), nach einem der Ansprüche 1 bis 12, **dadurch gekennzeichnet, dass** der Profilbereich (5) extrudiert oder im Spritzgussverfahren hergestellt wird und insbesondere an eine Gewebefahne anextrudiert, angenäht, angeschweißt oder angeklebt wird.

14. Sitz, insbesondere Kraftfahrzeugsitz, mit einer Ausstattungskomponente, insbesondere einem Sitzbezug (1), die mit einer Haltevorrichtung mit einem Haltemittel (2) mit Profilschenkeln (7), die sich im Hintergriff hinter einer Durchbrechung (4) in einem Sitzmaterial (3) gegeneinander abstützen, insbesondere nach einem der Ansprüche 1 bis 12, an dem Sitzmaterial (3) befestigt ist.

15. Sitz nach Anspruch 13, **dadurch gekennzeichnet, dass** das Sitzmaterial (3) ein Füllstoff, insbesondere ein Schaumstoff, insbesondere ein PU-Schaumstoff, ist, der eine vorbestimmte Härte aufweist, so dass der Füllstoff eine der einwirkenden Kraft der Profilschenkel (7) der Haltemittel (2) den Hintergriff aufrechterhaltende Gegenkraft entgegensetzt.

16. Sitz nach Anspruch 14 oder 15, **dadurch gekennzeichnet, dass** das Sitzmaterial (3) eine Sitzschale, insbesondere aus Hartkunststoff, ist.

17. Sitz nach einem der Ansprüche 14 bis 16, **dadurch gekennzeichnet, dass** die vorbestimmte Anzahl und Art von Haltemitteln (2) im Sinne einer Vorkonfektionierung am Sitzbezug (1) angeordnet sind.

18. Verfahren zum Befestigen einer Ausstattungskomponente eines Sitzes, insbesondere eines Sitzbezugs (1), wobei ein an der Ausstattungskomponente befestigtes Haltemittel (2), insbesondere ein Haltemittel (2) mit einem Profilbereich (5) mit klappbaren Profilschenkeln (7), nach einem der Ansprüche 1 bis 12, von einer Sitzoberseite (17) durch eine Durchbrechung (4) eines Sitzmaterials (3) des Sitzes zumindest so weit hindurchgeschoben wird, bis die angeklappte Profilschenkel (7) durch die Durchbrechung (4) bis zu einer Austrittsseite (18) vollständig hindurchgeführt sind, so dass sich die Profilschenkel (7) auf der Austrittsseite (18) seitwärts hinter Ränder (19) der Durchbrechung (4) entfalten.
